# EUROPÄISCHE PATENTANMELDUNG

(11) **EP 0 534 270 A1**
(43) Veröffentlichungstag der Anmeldung: **31.03.1993**
(21) Anmeldenummer: 92115703.8
(22) Anmeldetag: 14.09.1992
(51) Int. Cl.: G01L 1/14, G01G 3/00, G01G 3/08, G01G 3/12

(54) **Kraftsensor**

(30) Priorität: 26.09.1991 DE 4132108
(71) Anmelder: SIEMENS AKTIENGESELLSCHAFT, D-80333 München (DE)
(72) Erfinder: Beetz, Bernhard, Dr.-Ing., W-7460 Balingen (DE); Fritz, Harald, W-7517 Waldbronn 3 (DE)

(57) **Zusammenfassung**

Die Erfindung betrifft einen Kraftsensor, insbesondere eine Wägezelle, mit einem Krafteinleitungsteil (5), einem Verformungsteil (7) und einem Trageteil (6), bei dem mechanische Verformungen mit einem kapazitiven Meßumformer (1), der zwei parallel zueinander verstellbare Elektrodenstrukturen (2, 3) aufweist, die jeweils aus kammförmig angeordneten Elektroden (4) bestehen und ineinandergreifen, so daß sich die Gesamtkapazität des Meßumformers (1) aus einer Parallelschaltung von Elektrodenpaaren ergibt, in eine elektrisch meßbare Kapazitätsänderung umgeformt werden.

Die Erfindung wird angewandt bei Handhabungsgeräten und in der Wägetechnik.

## Beschreibung

Die Erfindung betrifft einen Kraftsensor, insbesondere eine Wägezelle, mit mindestens einem kapazitiven Meßumformer.

Bei Kraftsensoren muß die von einer zu messenden Kraft verursachte elastische Verformung eines Meßkörpers mit hoher Genauigkeit durch Meßumformer in ein elektrisches Signal umgewandelt werden. Parasitäre Einflüsse, wie z. B. Seitenkräfte, überlagerte Momente oder Temperatureffekte, sollen den Meßwert dabei möglichst wenig beeinflussen.

Aus der EP-OS 0 288 985 ist eine Wägezelle bekannt, bei der die zu messende Kraft durch Aufzeichnung der tangentialen Verformungen eines ringförmigen Verformungsteils gemessen wird, das durch schmale, ringförmige Stege, die als elastische Gelenke wirken, einerseits mit einem Krafteinleitungsteil, das als Zylinder mittig angeordnet ist, und andererseits mit einem Trageteil verbunden ist, das als Hohlzylinder die Anordnung umfaßt. Zur Messung der tangentialen Verformungen trägt das Verformungsteil Dehnungsmeßstreifen, deren elektrischer Widerstand sich in Abhängigkeit der Dehnungen ändert. Diese Dehnungsmeßstreifen haben den Nachteil, daß ihre relative Widerstandsänderung nur etwa das Doppelte der Dehnung beträgt. Da die Dehnung aber aus Gründen der Werkstoffbelastung des Verformungsteils nicht wesentlich über 1 %o gesteigert werden kann, variiert das auszuwertende elektrische Signal über den Meßbereich lediglich um 2 %o. Zudem ist die Applikation der Dehnungsmeßstreifen aufwendig. Im Heißklebeverfahren wird zunächst der Kleber aufgetragen, dann der Dehnungsmeßstreifen auf das Verformungsteil aufgebracht und schließlich die ganze Wägezelle unter Druck mehrere Stunden in einem Ofen aufbewahrt.

Eine weitere Wägezelle ist aus der DE-PS 37 36 154 bekannt. Dort sind zwischen einem zylindrischen Krafteinleitungsteil und einem hohlzylindrischen Trageteil zwei Verformungsringe koaxial hintereinander angeordnet. Sie umschließen einen Ringhohlraum, in dem auf den Oberflächen der Verformungsringe zur Messung tangentialer Dehnungen Dehnungsmeßelemente angebracht sind. Auch diese Wägezelle weist die obengenannten Nachteile auf.

Aus der EP-OS 0 354 386 ist ein Meßaufnehmer für Längen- oder Abstandsänderungen mit mechanisch elektrischer Meßgrößenumformung bekannt, bei dem als verstellbare Kapazität eine Kondensatoranordnung mit zwei parallel zueinander verstellbaren Elektrodenstrukturen vorgesehen ist. Die kammförmig ausgebildeten und ineinandergreifenden Elektrodenstrukturen bestehen jeweils aus mehreren ebenen, parallel im Abstand zueinander angeordneten Elektroden, die paarweise einander zugeordnet sind. Durch eine stark unsymmetrische Anordnung der Elektrodenstrukturen wird eine kapazitive Entkopplung erreicht, so daß die Gesamtkapazität der Kondensatoranordnung sich aus einer Parallelschaltung von Elektrodenpaaren ergibt, die jeweils durch einander zugeordnete Elektroden gebildet sind. Der kapazitive Meßaufnehmer wird dort zur berührungslosen Messung des Drehmoments an einer rotierenden Welle verwendet. Dazu wird mit dem Meßaufnehmer eine Torsion der Welle von wenigen Mikrometern erfaßt und in eine Kapazitätsänderung umgeformt. Ein Hinweis, daß dieser Meßaufnehmer für Längen- oder Abstandsänderungen auch bei Kraftsensoren oder Wägezellen eingesetzt werden kann, ist diesem Dokument nicht zu entnehmen.

Der Erfindung liegt die Aufgabe zugrunde, einen Kraftsensor, insbesondere eine Wägezelle, zu schaffen, der eine hohe Empfindlichkeit aufweist und bei dem die mechanisch-elektrische Meßgrößenumformung mit einem einfach applizierbaren Meßaufnehmer durchgeführt wird.

Zur Lösung dieser Aufgabe weist der neue Kraftsensor die im Anspruch 1 genannten Merkmale auf. Durch eine Wahl der Befestigungspunkte auf einer zu den Elektroden parallelen Linie kann gemäß Anspruch 2 erreicht werden, daß Temperaturschwankungen sich nicht auf die Kapazität des Meßumformers auswirken. In den Ansprüchen 3 bis 11 werden besonders vorteilhafte Ausführungsformen von Kraftsensoren angegeben, die sich durch eine gute Unempfindlichkeit gegenüber Querkräften und Momenten auszeichnen. Die Konstruktion der Kraftsensoren nach den Ansprüchen 12 und 13 ist sehr einfach; dennoch genügen sie in vielen Anwendungsfällen den gestellten Anforderungen.

Die Erfindung hat gegenüber Kraftsensoren mit resistiven Dehnungsmeßstreifen den Vorteil, daß die elektronische Auswertung der Kapazitätsänderung entweder in einer Meßbrücke oder in einem Schwingkreis erfolgen kann. Bei der Auswertung in einem Schwingkreis wird direkt ein frequenzproportionales Signal geliefert, so daß keine aufwendige A/D-Wandlung erforderlich ist. Der Kondensatorkamm des kapazitiven Meßumformers kann z. B. durch anisotropes Ätzen von Silizium gefertigt und relativ einfach im Kraftsensor appliziert werden. Durch geeignete Konstruktion der Elektroden kann erreicht werden, daß stets gleich große aktive Elektrodenflächen vorliegen. Dadurch wird die Montage der kapazitiven Meßumformer sehr unkritisch. Insbesondere erfordert sie kein Heißkleben, das bei der Applikation resistiver Dehnungsmeßstreifen einen hohen Aufwand darstellt. Durch geeignete Wahl der Befestigungspunkte kann beim kapazitiven Meßumformer die Temperaturabhängigkeit der Kapazität nahezu völlig ausgeschaltet werden, während beim resistiven Dehnungsmeßstreifen stets eine Kompensationsschaltung benötigt wird. Besonders vorteilhaft sind die erfindungsgemäßen Kraftsensoren in explosionsgefährdeten Bereichen einsetzbar, da ihre Leistungsaufnahme sehr gering ist. Demgegenüber müssen resistive Dehnungsmeßstreifen mit einigen Milliampere gespeist werden. Zudem kann eine hohe Genauigkeit des Kraftsensors erreicht werden, da der kapazitive Meßumformer Längenänderungen über einen größeren Abstand zwischen den beiden Befestigungspunkten mißt, der Elektrodenabstand aber wesentlich kleiner gewählt werden kann. Die Empfindlichkeit, d. h. die relative Kapazitätsänderung, ist um den Faktor "Abstand der beiden Befestigungspunkte geteilt durch Elektrodenabstand" mal größer als die Dehnung zwischen den beiden Befestigungspunkten. Dies ist ein wesentlicher Vorteil gegenüber den resistiven Dehnungsmeßstreifen, deren Empfindlichkeit lediglich etwa das Zweifache der Dehnung beträgt. Elektrostatische Kräfte zwischen den Elektrodenpaaren und die Eigensteifigkeit des kapazitiven Meßumformers sind vernachlässigbar klein, so daß praktisch keine zusätzlichen Rückstellkräfte durch den kapazitiven Meßumformer verursacht werden. Weiterhin ist eine Anpassung an unterschiedliche Dehnungspegel für verschiedene Meßbereiche durch Einjustieren eines passenden Elektrodenabstandes leicht möglich. Die Fertigung der Kraftsensoren ist weitgehend automatisierbar, da die kapazitiven Meßumformer mit einem einfachen Auflötvorgang appliziert werden können.

Anhand der Zeichnungen, in denen Ausführungsbeispiele der Erfindung dargestellt sind, werden im folgenden die Erfindung sowie Ausgestaltungen und Vorteile näher erläutert.

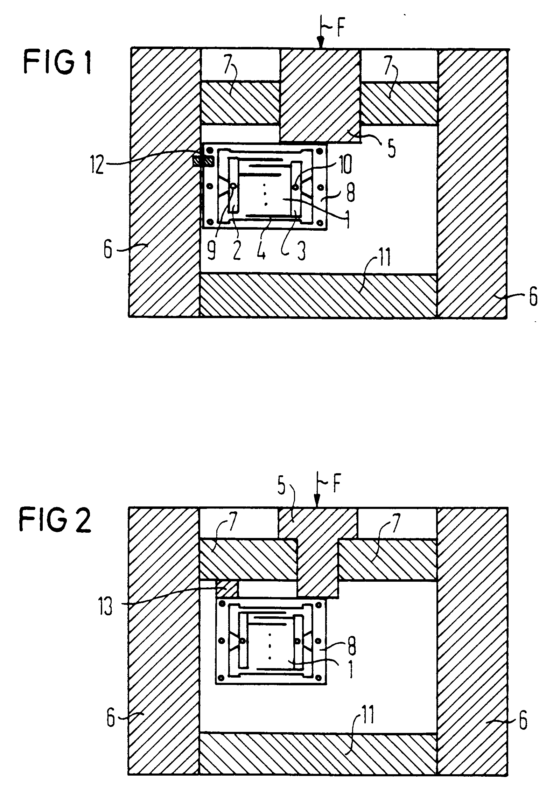

Es zeigen:
- Figur 1: einen Kraftsensor in Dosenform,
- Figur 2: einen Kraftsensor in Dosenform mit variabler Größe,
- Figur 3: ein Schnittbild des Kraftsensors nach Figur 2 mit zwei kapazitiven Meßumformern,
- Figur 4: einen Kraftsensor in Dosenform mit horizontaler Befestigung der kapazitiven Meßumformer,
- Figur 5: ein Schnittbild des Kraftsensors nach Figur 4,
- Figur 6: einen Kraftsensor mit einem Biegering,
- Figur 7: einen Kraftsensor mit zwei Biegeringen,
- Figur 8: einen Kraftsensor mit Parallelogrammfeder,
- Figur 9: einen vertikalen Schnitt durch den Kraftsensor nach Figur 8,
- Figur 10: einen horizontalen Schnitt durch den Kraftsensor nach Figur 8,
- Figur 11: einen Kraftsensor mit Scherkraftfeder,
- Figur 12: einen vertikalen Schnitt durch den Kraftsensor nach Figur 11 und
- Figur 13: einen horizontalen Schnitt durch den Kraftsensor nach Figur 11.
Der Kraftsensor in Figur 1 besteht aus einem Trageteil 6, das als Hohlzylinder ausgebildet ist, einem Krafteinleitungsteil 5, das als Zylinder durch eine scheibenförmige Membrane 7 koaxial zum Trageteil 6 gehalten wird, einer Bodenplatte 11 zum schmutzdichten Abschluß des im Hohlzylinder eingeschlossenen Raums und einem kapazitiven Meßumformer 1. In dem kapazitiven Meßumformer 1 befinden sich zwei kammförmige Elektrodenstrukturen 2 und 3 mit Elektroden 4, die eine Parallelschaltung von mehreren gleichen Kondensatoren ergeben und so justiert sind, daß jeweils ein kleiner und ein wesentlich größerer Elektrodenabstand aufeinanderfolgen. Dadurch bestimmen die kleinen Abstände die Kapazität des Meßumformers 1. Der kleine Elektrodenabstand kann z. B. 20 µm betragen und wird durch die Verformung der Membrane 7 um 10 µm verändert. Dadurch ergibt sich eine Kapazitätsänderung von 50 %. Der Elektrodenabstand kann innerhalb bestimmter Grenzen an den Meßweg des Verformungsteils 7 angepaßt werden. Die Elektrodenstrukturen 2 und 3 können z. B. durch anisotropes Ätzen von Silizium gefertigt werden. Da der Temperaturkoeffizient von Silizium klein ist und nur etwa 3 . 10⁻⁶/K beträgt, ergibt sich ein kleiner Temperaturgang des kapazitiven Meßumformers 1. Ausschlaggebend ist jedoch die richtige Befestigung des Elements. In Figur 1 sind die Elektrodenstrukturen 2 und 3 auf einer zu den Elektroden 4 parallel verlaufenden Linie an den Punkten 9 und 10 befestigt. So ergeben sich für den kapazitiven Meßumformer 1 nur sehr kleine Fehler durch Wärmedehnung. Die Wärmedehnung eines Rahmens 8, der zur Parallelführung der Elektrodenstrukturen 2 und 3 dient, geht auf die Größe der Elektrodenflächen ein und nicht auf ihren Abstand. Durch geeignete Konstruktion der Elektrodenstrukturen 2 und 3, wie aus der EP-OS 0 354 386 bekannt, kann dieser Fehler nahezu völlig eliminiert werden. Für den Temperaturgang des Kraftsensors muß der kapazitive Meßumformer 1 in Kombination mit den übrigen Teilen 5, 6, 7 und 11 gesehen werden.

Wie die folgende Überlegung zeigt, wäre eine Befestigung des kapazitiven Meßumformers 1 zwischen Krafteinleitungsteil 5 und Bodenplatte 11 ohne eine zusätzliche Temperaturkompensation praktisch unbrauchbar:
Geht man von einer maximalen Durchbiegung der Membrane 7 bei Nennlast von ca. 0,1 mm und von einer maximalen Teilezahl von 30.000 aus, so ergibt sich als kleinste noch aufzulösende Weglänge ca. 3 nm. Auftretende Fehler, insbesondere durch Temperatureinwirkung, die in der Richtung der Krafteinwirkung eine Wegänderung von mehr als 3 nm verursachen, müssen daher kompensiert werden. Beträgt nun der Abstand zwischen Krafteinleitungsteil 5 und Bodenplatte 11 30 mm, so ergibt sich eine Abstandsänderung bei rostfreiem, austenitischem Stahl von ca. 480 nm/°C. Das ist etwa das 150fache eines Teilungsschrittes. Eine solche Wahl der Befestigungspunkte führt zu keinen brauchbaren Ergebnissen.

Bessere Ergebnisse werden erreicht, wenn der kapazitive Meßumformer 1 am Krafteinleitungsteil 5 und mit einem Befestigungszapfen 12 am Trageteil 6 montiert ist. Wärmedehnungen des Trageteils 6 senkrecht zur Richtung der zu messenden Kraft F werden durch Verschiebung des Rahmens 8 auf den Zapfen 12 kompensiert. Die Krafteinleitung muß sehr genau in der Mitte der Membrane 7 erfolgen. Dadurch werden aber die Abmessungen des Kraftsensors durch die Abmessungen des kapazitiven Meßumformers 1 festgelegt. Eine Anpassung an unterschiedliche Lasten kann nur durch andere Abmessungen des Rahmens 8 erfolgen.

Größere Freiheitsgrade bringt dagegen eine Befestigung des kapazitiven Meßumformers 1 mit dem Rahmen 8 direkt an der Membrane 7, wie es in Figur 2 gezeigt ist. Die Befestigung des Rahmens 8 muß möglichst rückwirkungsfrei sein, z. B. durch konstruktive Anbindung an die neutrale Faser in der Membrane 7. Sie darf zudem nicht kippen. Eventuell ist der Rahmen 8 nur mit dem Krafteinleitungsteil 5 zu verschrauben, um eine statische Überbestimmung zu vermeiden. Um eine Ausrichtung der Elektroden in radialer Richtung zu ermöglichen, ist an der Membrane 7 eine Erhebung 13 angebracht.

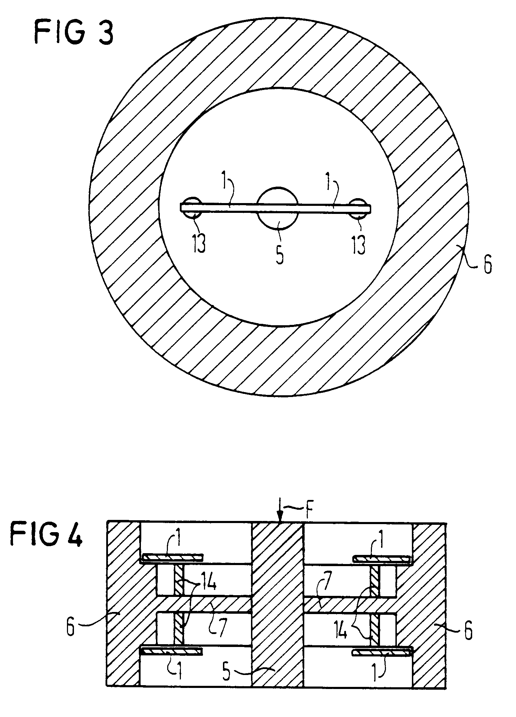

Figur 3 zeigt ein Schnittbild durch einen Kraftsensor, der im wesentlichen dem in Figur 2 dargestellten entspricht, jedoch mit zwei kapazitiven Meßumformern 1 ausgerüstet wurde. Verkippungen der Membrane wirken mit unterschiedlichem Vorzeichen auf die kapazitiven Meßumformer 1 und werden dadurch meßtechnisch kompensiert. Querkräfte und Momente haben somit keine Auswirkungen auf das Meßergebnis.

Bei dem in Figur 4 dargestellten Kraftsensor ist die Membrane 7 mittig zwischen dem Krafteinleitungsteil 5 und dem Trageteil 6 angeordnet. Auf beiden Seiten weist die Membrane 7 axiale Erhebungen 14 auf, die als Biegering oder als Bolzen realisiert sein können. Diese axialen Erhebungen 14 ragen so weit aus der Ebene der Membrane 7 heraus, daß sie an ihrer höchsten Stelle aufgrund der Krümmung der Membrane 7 bei Belastung eine Bewegung entlang einer nahezu radialen Linie ausführen. Diese Bewegung kann nun mit vier horizontal angeordneten, kapazitiven Meßumformern 1 erfaßt werden.

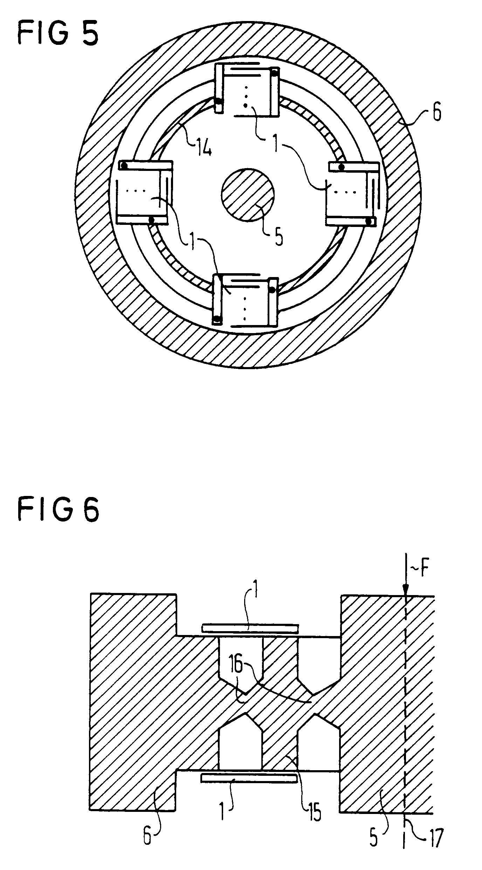

Figur 5 zeigt ein horizontales Schnittbild durch einen Kraftsensor nach Figur 4, aus dem ersichtlich ist, daß die kapazitiven Meßumformer 1 in dieser Anordnung direkt ohne Rahmen eingesetzt werden können. Störeinflüsse sind durch die Verwendung von gleichzeitig acht kapazitiven Meßumformern sehr gut kompensierbar. Während Kraftsensoren mit einer Membrane möglicherweise fertigungstechnisch einfacher sind, erlauben Ausführungen mit einem Biegering bei etwas komplizierterer Konstruktion des Drehteils die Herstellung von Kraftsensoren für einen breiten Lastbereich von einigen hundert Kilogramm bis mehr als 100 t.

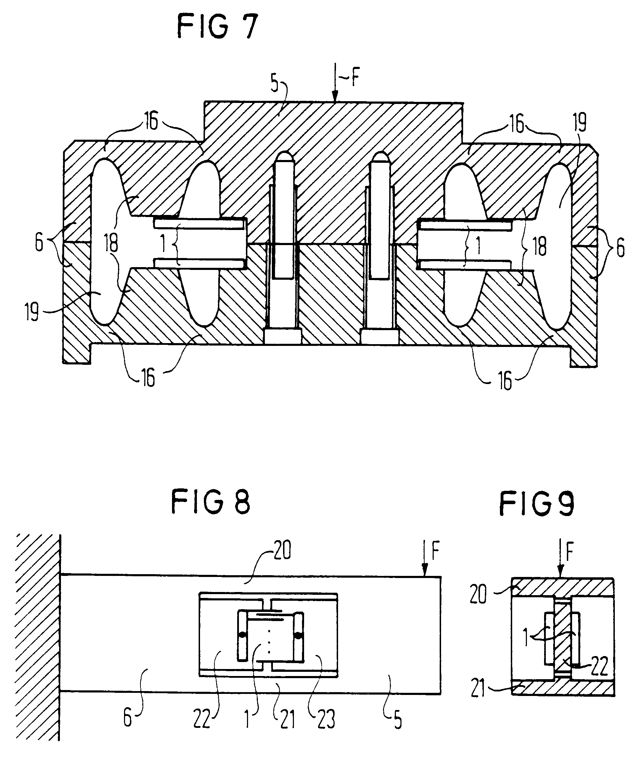

Figur 6 zeigt einen Kraftsensor mit einem Biegering 15 als Verformungsteil, der über zwei wie elastische Gelenke wirkende Verjüngungen 16 mit dem Trageteil 6 und dem Krafteinleitungsteil 5 verbunden ist. Wird der Kraftsensor mit einer zu messenden Kraft F in Richtung der Symmetrieachse 17 belastet, so führt der Biegering 15 eine Kippbewegung aus, die von den horizontal angeordneten, kapazitiven Meßumformern 1 als Abstandsänderung detektierbar ist. Die Breite des Biegerings 15 kann bei Verwendung kapazitiver Meßumformer 1 erheblich kleiner gewählt werden als für die Applikation von resistiven Dehnungsmeßstreifen, da für die Befestigung des Meßumformers für Abstandsmessung nur eine minimale Breite benötigt wird. Somit wird vor allem die Konstruktion von Kraftsensoren oder Wägezellen für Lasten unterhalb von 600 kg erheblich erleichtert, da bei schmäleren Biegeringen 15 die Biegestellen 16 stärker ausgeführt werden können. Selbstverständlich können die kapazitiven Meßumformer 1 statt auf dem Trageteil 6 auch auf dem Krafteinleitungsteil 5 angebracht werden. Die Orientierung der Elektroden ist tangential zur Symmetrieachse 17 ausgerichtet. Wärmedehnungen in radialer Richtung wirken sich direkt auf den Elektrodenabstand aus, da sich die Befestigungspunkte der beiden kapazitiven Meßumformer 1 in unterschiedlichem Abstand zur Mitte des Kraftsensors befinden. Dieser Effekt kann vermieden werden, wenn die beiden Befestigungspunkte exakt auf eine tangentiale Linie gelegt werden. Andernfalls muß bei der Konstruktion darauf geachtet werden, daß sich der Befestigungspunkt am Bolzen bzw. Biegering möglichst nahe am zweiten Befestigungspunkt befindet oder daß der Befestigungspunkt auf dem Trageteil 6 bzw. Krafteinleitungsteil 5 durch geeignete Befestigungselemente radial zum Befestigungspunkt auf dem Verformungsteil geführt wird. Die Wärmedehnung des Befestigungselements soll dabei die Wärmedehnung aufgrund der übrigen Teile kompensieren. Zusätzlich können Wärmedehnungen auch noch durch geeignete elektrische Zusammenschaltung von kapazitiven Meßumformern 1 auf Ober- und Unterseite kompensiert werden, da sich hier die Wärmedehnungen gleichsinnig, Kraftdehnungen jedoch gegensinnig auf die Kapazität auswirken. Wärmedehnungen in Kraftrichtung beeinflussen die Messung nicht. Bei Krafteinleitung auf die Wägezelle kippt der Biegering 15 auf der Oberseite nach innen und auf der Unterseite nach außen. Für den darauf befestigten kapazitiven Meßumformer bedeutet dies, daß er sich geringfügig aus der horizontalen Ebene herausbewegt. Dadurch könnte sich eventuell die aktive Elektrodenfläche verkleinern. Dieser Effekt ist jedoch so klein, daß er konstruktiv eliminiert werden kann. Es ist lediglich eine der beiden Elektrodenstrukturen dünner auszulegen, so daß sich selbst bei leichter Kippbewegung dieser Elektrodenstruktur die aktive Elektrodenfläche nicht ändert.
Bei dem Kraftsensor nach Figur 7 sind zwei Biegeringe 18 koaxial hintereinander angeordnet. Sie sind an ihren äußeren Flächen eben und über elastische Gelenke 16 mit Krafteinleitungsteil 5 und Trageteil 6 verbunden. Jeweils auf einer Erhebung der Biegeringe 18, die in den eingeschlossenen Hohlraum 19 hineinragt, sind kapazitive Meßumformer 1 angebracht, deren zweite Befestigungsstelle auf dem Krafteinleitungsteil 5 liegt. Wie beim Kraftsensor nach Figur 6 wird mit den kapazitiven Meßumformern 1 die durch das Kippen der Biegeringe 18 bei Belastung verursachte Abstandsänderung gemessen. In diesem Kraftsensor sind die kapazitiven Meßumformer 1 bereits ohne zusätzliche Kapselung oder Gehäuse gegenüber äußeren Einwirkungen geschützt. Der Kraftsensor weist eine hohe Linearität auf, ist sehr kompakt, besitzt eine geringe Empfindlichkeit gegen mechanische Beeinflussungen und Querkräfte und ist leicht zu fertigen.

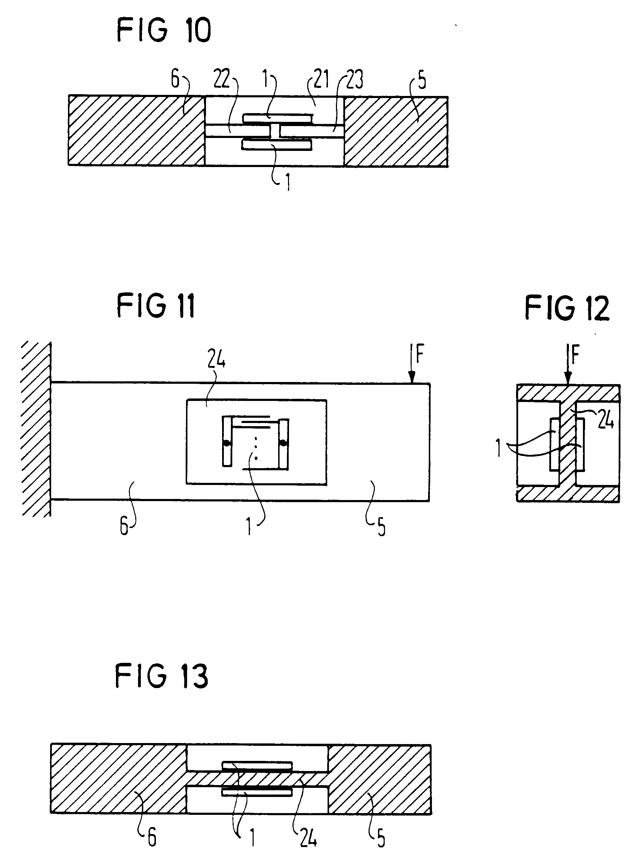

Kapazitive Meßumformer 1 können auch nach Figur 8 auf einer Parallelogrammfeder appliziert werden, zu der in Figur 9 ein vertikaler und in Figur 10 ein horizontaler Schnitt dargestellt sind. Parallelogrammfedern eignen sich bevorzugt für den unteren Lastbereich bis ca. 200 kg, da sie hier brauchbare Verformungswege liefern. Durch Ausfräsen eines Monoblocks wird eine Parallelogrammfeder, die aus einer oberen Blattfeder 20 und einer unteren Blattfeder 21 besteht, hergestellt, wobei materialmittig in der Aussparung zwei Stege 22 und 23 stehengelassen werden. Auf diesen beiden Stegen 22 und 23 wird beidseitig je ein kapazitiver Meßumformer 1 befestigt. Ein Rahmen zur Parallelführung der Elektrodenstrukturen ist hier nicht erforderlich. Belastet man den Monoblock, so bewegen sich infolge der Biegung der Parallelogrammfedern 20, 21 die beiden Stege 22 und 23 gegeneinander und verursachen eine Änderung des Elektrodenabstands in den kapazitiven Meßumformern 1. Wärmedehnungen der Parallelogrammfedern 20 und 21 verlaufen senkrecht zur Richtung der zu messenden Kraft F und gehen nicht auf den Elektrodenabstand ein. Ein Einfluß auf die wirksame Elektrodenfläche kann durch geeignete Formgebung der Elektrodenstrukturen eliminiert werden. Wärmedehnungen in Kraftrichtung stören das Meßergebnis nicht, so lange die Befestigungspunkte der kapazitiven Meßumformer 1 exakt auf einer horizontalen Linie liegen.

Für größere Lasten verwendet man besser eine Scherkraftfeder gemäß Figur 11, zu der die Figur 12 einen vertikalen Schnitt und die Figur 13 einen horizontalen Schnitt zeigen. Sie unterscheidet sich von der Parallelogrammfeder lediglich dadurch, daß in der Aussparung keine Stege herausgearbeitet werden. Die kapazitiven Meßumformer 1 werden beidseitig auf eine dünne Wand 24 aufgebracht, die man materialmittig in einer Aussparung stehenläßt. Sie messen in diesem Fall die infolge der Belastung durch eine zu messende Kraft F auftretende Scherkraft. Wärmedehnungen sind hier ebenso unkritisch wie bei der Parallelogrammfeder. Die beiden kapazitiven Meßumformer 1 können elektrisch, z. B. in einer Halbbrücke, verschaltet werden. Durch entsprechende Anordnung der Elektrodenstrukturen kann erreicht werden, daß sich die Kapazitäten der beiden kapazitiven Meßumformer 1 bei Belastung gegensinnig verhalten. Auch eine elektrische Anordnung in zwei Schwingkreisen ist möglich, deren unterschiedliche Frequenzänderungen in Abhängigkeit von der Belastung gemessen werden.

## Patentansprüche

1. Kraftsensor, insbesondere Wägezelle,
- mit mindestens einem kapazitiven Meßumformer (1), der zwei parallel zueinander verstellbare Elektrodenstrukturen (2, 3) aufweist, die jeweils aus kammförmig angeordneten Elektroden (4) bestehen und ineinandergreifen, so daß sich die Gesamtkapazität des Meßumformers (1) aus einer Parallelschaltung von Elektrodenpaaren ergibt,
- mit einem Krafteinleitungsteil (5) zur Einleitung der zu messenden Kraft (F) auf dem Sensor,
- mit einem Trageteil (6), mit dem der Sensor auf einem Gegenlager gehalten wird,
- mit mindestens einem elastischen Verformungsteil (7), welches das Krafteinleitungsteil (5) mit dem Trageteil (6) verbindet, so daß sich in Abhängigkeit von der zu messenden Kraft (F) die relative Lage des Krafteinleitungsteils (5) zum Trageteil (6) und die Form des Verformungsteils (7) verändern, wobei
- mindestens ein kapazitiver Meßumformer (1) an mindestens zwei Punkten befestigt ist, die ihre relative Lage zueinander in Abhängigkeit von der zu messenden Kraft (F) verändern, so daß die Änderung der Kapazität des Meßumformers (1) ein Maß für die Kraft (F) ist.

2. Kraftsensor nach Anspruch 1, **dadurch gekennzeichnet,**
- daß mindestens ein kapazitiver Meßumformer (1) derart befestigt wird, daß eine Änderung der relativen Lage der Befestigungspunkte aufgrund von Temperaturschwankungen im wesentlichen eine Verstellung der Elektrodenstrukturen (2, 3) in einer parallel zu den Elektroden (4) verlaufenden Richtung bewirkt, so daß die Kapazität unabhängig von Temperaturschwankungen ist.

3. Kraftsensor nach Anspruch 1 oder 2**, dadurch gekennzeichnet,**
- daß das Trageteil (6) ein Hohlzylinder ist und
- daß das Krafteinleitungsteil (5) ein Zylinder ist, der durch das Verformungsteil (7) koaxial im Innern des Trageteils (6) gehalten wird und bei Einwirkung einer zu messenden Kraft (F) in axialer Richtung ausgelenkt wird.

4. Kraftsensor nach Anspruch 3, **dadurch gekennzeichnet,**
- daß das Verformungsteil (7) eine Membrane ist, die koaxial zum Trageteil (6) angeordnet ist.

5. Kraftsensor nach Anspruch 3 oder 4, **dadurch gekennzeichnet,**
- daß die Elektroden (4) der Elektrodenstrukturen (2, 3) mindestens eines kapazitiven Meßumformers (1) radial zur Zylinderachse angeordnet sind.

6. Kraftsensor nach Anspruch 5, **dadurch gekennzeichnet,**
- daß mindestens ein kapazitiver Meßumformer (1) jeweils an einem Punkt des Krafteinleitungsteils (5) und an einem Punkt des Trageteils (6) befestigt ist.

7. Kraftsensor nach Anspruch 5, **dadurch gekennzeichnet,**
- daß mindestens ein kapazitiver Meßumformer (1) jeweils an einem Punkt des Verformungsteils (7) und des Krafteinleitungsteils (5) oder des Trageteils (6) befestigt ist.

8. Kraftsensor nach Anspruch 4, **dadurch gekennzeichnet,**
- daß die Membrane (7) mit mindestens einer Erhebung (14) in axialer Richtung versehen ist, deren höchster Punkt sich bei Krafteinwirkung aufgrund der Krümmung der Membrane (7) nahezu auf einer radialen Linie bewegt, und
- daß mindestens ein kapazitiver Meßumformer (1) jeweils an einem Punkt der Erhebung (14) und des Krafteinleitungsteils (5) oder des Trageteils (6) befestigt ist, so daß die Elektroden (4) tangential oder axial ausgerichtet sind.

9. Kraftsensor nach Anspruch 8, **dadurch gekennzeichnet,**
- daß die Erhebung (14) ein koaxial an der Membrane (7) befestigter Ring ist.

10. Kraftsensor nach Anspruch 8, **dadurch gekennzeichnet,**
- daß die Erhebung (14) ein in der Membrane (7) eingefügter Bolzen ist.

11. Kraftsensor nach Anspruch 3, **dadurch gekennzeichnet,**
- daß das Verformungsteil (7) aus zwei koaxial hintereinander angeordneten Membranen gebildet wird, die jeweils eine koaxiale, ringförmige Erhebung (18) aufweisen, die in den Raum (19) zwischen den beiden Membranen hineinragt, und
- daß mindestens ein kapazitiver Meßumformer (1) auf mindestens einer Erhebung (18) der Membranen und dem Krafteinleitungsteil (5) oder dem Trageteil (6) derart befestigt ist, daß die Elektroden (4) in tangentialer Richtung liegen.

12. Kraftsensor nach Anspruch 1 oder 2, **dadurch gekennzeichnet,**
- daß das Verformungsteil (7) eine Parallelogrammfeder (20, 21) ist.

13. Kraftsensor nach Anspruch 1 oder 2, **dadurch gekennzeichnet,**
- daß das Verformungsteil (7) eine Scherkraftfeder (24) ist.
